# EUROPÄISCHE PATENTANMELDUNG

(11) **EP 0 869 490 A2**
(43) Veröffentlichungstag der Anmeldung: **07.10.1998**
(21) Anmeldenummer: 98200957.3
(22) Anmeldetag: 26.03.1998
(51) Int. Cl.: G11B 15/675, G11B 15/18

(54) **Magnetbandkassettengerät**

(30) Priorität: 05.04.1997 DE 19714113
(71) Anmelder: Philips Patentverwaltung GmbH, 22335 Hamburg (DE); Koninklijke Philips Electronics N.V., 5621 BA Eindhoven (NL)
(72) Erfinder: Kunze, Norbert, Röntgenstrasse 24, 22335 Hamburg (DE); Koch, Stefan, Röntgenstrasse 24, 22335 Hamburg (DE)
(74) Vertreter: von Laue, Hanns-Ulrich, Dipl.-Ing.

(57) **Zusammenfassung**

Die Erfindung betrifft ein Magnetbandkassettengerät mit einem Lademechanismus (18, 19) zum Laden der Magnetbandkassette (21) von einer Auswurfposition in eine Wiedergabeposition und mit einem Magnetkopftransportmechanismus (9, 12) zum Transport eines Magnetkopfes (8). Um eine störungsfreie Funktion des Magnetkopftransportmechanismus zu gewährleisten, sind Verriegelungsmittel (13) zum Verriegeln des Magnetkopftransportmechanismus (9, 12) in Abhängigkeit der Position des Lademechanismus (18, 19) vorgesehen.

## Beschreibung

Die Erfindung betrifft ein Magnetbandkassettengerät mit einem Lademechanismus zum Laden der Magnetbandkassette von einer Auswurfposition in eine Wiedergabeposition und mit einem Magnetkopftransportmechanismus zum Transport eines Magnetkopfes.

Es sind Magnetbandkassettengeräte bekannt, die einen Lademechanismus aufweisen, der die Magnetbandkassette von einer Auswurfposition, in der die Kassette von einer Bedienperson entnommen werden kann, in eine Wiedergabeposition transportiert. In der Wiedergabeposition sind die Wickelteller des Magnetbandkassettengerätes mit den Wickelöffnungen der Magnetbandkassette in Eingriff. Zum Transport des Magnetkopfes weisen diese Magnetbandkassettengeräte vielfach eine Trägerplatte auf, die drehbar an einer Chassisplatte gelagert ist und an der der Magnetkopf angeordnet ist. Mittels Verdrehen der Trägerplatte kann der Magnetkopf auf das Magnetband der Magnetbandkassette zubewegt bzw. von diesem wegbewegt werden. Zum Verdrehen der Trägerplatte ist eine drehbare Steuerscheibe mit einer Steuerkontur vorgesehen, die bei Drehung auf einen an der Trägerplatte angeordneten Steuerstift einwirkt und dadurch die Trägerplatte verdreht.

Bei einem derartigen Magnetbandkassettengerät kann es bei der Montage in der Fertigung oder durch Vibrationen während des Betriebes des Magnetbandkassettengerätes dazu kommen, daß die Steuerscheibe verdreht wird und der Magnetkopf in die Wiedergabeposition bewegt wird, obwohl die Magnetbandkassette sich nicht in der Wiedergabeposition befindet. Dies kann zu einer Beschädigung des Magnetbandkassettengerätes führen.

Es ist Aufgabe der Erfindung, ein Magnetbandkassettengerät der eingangs genannten Art zu schaffen, welches die oben beschriebenen Fehlfunktionen des Magnetkopftransportmechanismus ausschließt.

Diese Aufgabe ist erfindungsgemäß dadurch gelöst, daß Verriegelungsmittel zum Verriegeln des Magnetkopftransportmechanismus in Abhängigkeit der Position des Lademechanismus vorgesehen sind.

Wenn der Lademechanismus sich nicht in der Wiedergabeposition befindet, verriegeln die Verriegelungsmittel den Magnetkopftransportmechanismus und verhindern so eine unerwünschte Bewegung des Magnetkopfes.

Befindet sich der Lademechanismus dagegen in der Wiedergabeposition, d.h. ist die Magnetbandkassette auf die Wickelteller abgesenkt, so wird die Verriegelung aufgehoben, und der Magnetkopftransportmechanismus kann den Magnetkopf zur Wiedergabe in Richtung auf das Magnetband der Magnetbandkassette zubewegen.

Damit ist eine störungsfreie Funktion des Magnetkopftransportmechanismus gewährleistet.

Eine vorteilhafte Ausgestaltung der Erfindung ist dadurch gekennzeichnet, daß der Magnetkopftransportmechanismus eine antreibbare Steuerscheibe mit einer Steuerkontur aufweist und daß die Verriegelungsmittel zur Verriegelung der Steuerscheibe vorgesehen sind.

Eine derartige antreibbare Steuerscheibe kann bei der Montage oder durch Vibration im Betrieb besonders leicht verdreht werden und so eine Fehlfunktion des Magnetkopftransportmechanismus bewirken. Daher ist es bei Magnetkopftransportmechanismen, die eine antreibbare Steuerscheibe aufweisen, besonders vorteilhaft, die Verriegelungsmittel direkt an der Steuerscheibe angreifen zu lassen.

Eine weitere vorteilhafte Ausgestaltung der Erfindung ist dadurch gekennzeichnet, daß der Lademechanismus eine von einem Transportrad antreibbare Transportstange aufweist und daß die Transportstange zur Entriegelung der Verriegelungsmittel vorgesehen ist.

Die Transportstange weist in der Wiedergabeposition des Lademechanismus und in der Auswurfposition des Lademechanismus jeweils eine verschiedene Position auf. In der Auswurfposition des Lademechanismus wirkt die Transportstange nicht auf die Verriegelungsmittel ein. In der Wiedergabeposition des Lademechanismus entriegelt die Transportstange die Verriegelungsmittel und gibt so den Magnetkopftransportmechanismus frei.

Da die Transportstange zum Lademechanismus gehört, sind keine zusätzlichen Betätigungsmittel zum Entriegeln der Verriegelungsmittel erforderlich. Dadurch wird die Anordnung besonders einfach.

Eine weitere vorteilhafte Ausgestaltung der Erfindung ist dadurch gekennzeichnet, daß die Verriegelungsmittel eine Verriegelungsfeder mit einer Verriegelungsnase aufweisen, die den Magnetkopftransportmechanismus blockiert, wenn der Lademechanismus nicht in der Wiedergabeposition ist.

Eine Verriegelungsfeder mit einer Verriegelungsnase läßt sich sehr einfach und kostengünstig realisieren.

Eine weitere vorteilhafte Ausgestaltung der Erfindung ist dadurch gekennzeichnet, daß die Verriegelungsnase der Verriegelungsfeder in eine Öffnung der Steuerscheibe eingreift, wenn der Lademechanismus nicht in der Wiedergabeposition ist.

Wenn der Lademechanismus sich nicht in der Wiedergabeposition befindet, drückt die Verriegelungsnase der Verriegelungsfeder infolge der Federkraft in die Öffnung der Steuerscheibe und verhindert, daß sich die Steuerscheibe z.B. infolge von Vibrationen verdreht und dadurch eine unerwünschte Bewegung des Magnetkopfes bewirkt.

Eine weitere vorteilhafte Ausgestaltung der Erfindung ist dadurch gekennzeichnet, daß die Transportstange des Lademechanismus in der Wiedergabeposition die Verriegelungsfeder aus der Öffnung der Steuerscheibe herausdrückt, so daß die Steuerscheibe entriegelt ist.

Eine derartige Betätigung der Verriegelungsfeder läßt sich einfach realisieren, da die Tranportstange des Lademechanismus ohnehin vorhanden ist. In der Wiedergabeposition drückt die Transportstange die Verriegelungsfeder aus der Öffnung der Steuerscheibe, während in den anderen Positionen des Lademechanismus, z.B. in der Auswurfposition und weiteren Zwischenpositionen, die Transportstange nicht auf die Verriegelungsfeder einwirkt und die Verriegelungsnase der Verriegelungsfeder infolge der Federkraft in die Öffnung der Steuerscheibe gedrückt wird.

Eine weitere vorteilhafte Ausgestaltung der Erfindung ist dadurch gekennzeichnet, daß die Steuerscheibe als Zahnrad mit einem Zahnkranz ausgebildet ist und daß der Zahnkranz in einem Öffnungswinkelbereich eine Nut aufweist, die zum Eingreifen der Verriegelungsnase der Verriegelungsfeder vorgesehen ist, falls der Lademechanismus sich nicht in der Wiedergabeposition befindet.

Eine derartige Konstruktion ist platzsparend und benötigt keine zusätzliche Verriegelungsnut bzw. Verriegelungsfalle im inneren Bereich der Steuerscheibe.

Das erfindungsgemäße Magnetbandkassettengerät läßt sich vorteilhaft in einem Autoradio sowie in einem Fahrzeug einsetzen.

Einige schematisch dargestellte Ausführungsbeispiele der Erfindung werden nachfolgend anhand der Zeichnung in den Fig. 1 bis 4 näher erläutert. Es zeigen:
Fig. 1 eine schematisch dargestellte Draufsicht auf ein Magnetbandkassettengerät mit einem Magnetkopftransportmechanismus, der eine Steuerscheibe aufweist, einer Verriegelungsfeder für die Steuerscheibe und einer Transportstange eines nicht näher dargestellten Lademechanismus, wobei die Transportstange des Lademechanismus und der Magnetkopftransportmechanismus sich in einer Auswurfposition befinden und die Verriegelungsfeder die Steuerscheibe verriegelt,
Fig. 2 eine schematisch dargestellte Draufsicht auf das Magnetbandkassettengerät gemäß Fig. 1, wobei die Transportstange des Lademechanismus und der Magnetkopftransportmechanismus sich in einer Wiedergabeposition befinden und die Transportstange die Verriegelungsfeder entriegelt,
Fig. 3 eine vergrößerte perspektivische Darstellung der Transportstange und der Verriegelungsfeder in der Wiedergabeposition, wobei die Transportstange die Verriegelungsfeder hochdrückt und dadurch die Verriegelungsnase der Verriegelungsfeder die Steuerscheibe freigibt,
Fig. 4 eine perspektivische Darstellung der Steuerscheibe mit einer Steuerkontur, wobei die Steuerscheibe einen Zahnkranz mit einer Nut aufweist, die für das Eintauchen der Verriegelungsnase der Verriegelungsfeder vorgesehen ist.

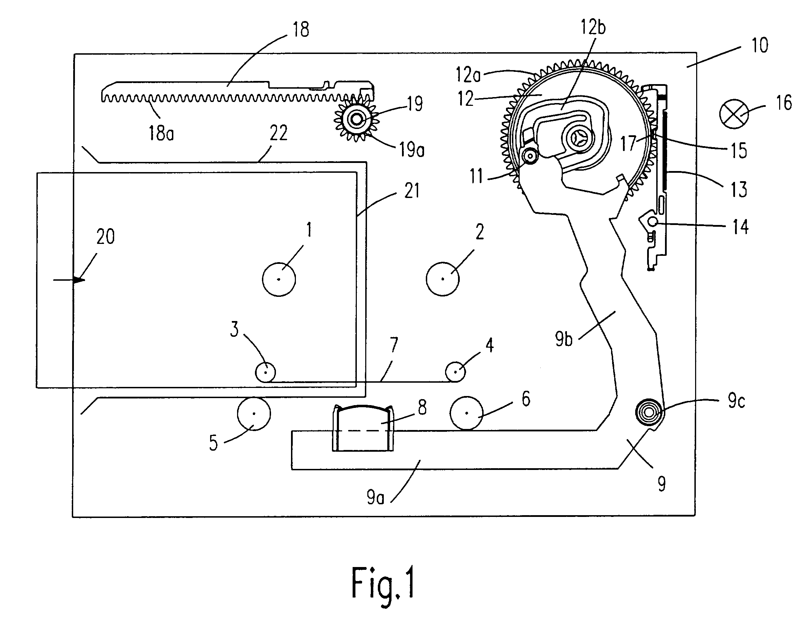

Fig. 1 zeigt schematisch eine Draufsicht auf Teile eines Magnetbandkassettengerätes in einer Auswurfposition. Es sind ein erstes Wickelrad 1, ein zweites Wickelrad 2 sowie eine erste Tonwelle 3 und eine zweite Tonwelle 4 vorgesehen. Das erste Wickelrad 1, das zweite Wickelrad 2, die erste Tonwelle 3 und die zweite Tonwelle 4 sind mittels nicht näher dargestellter Antriebsmechanismen drehend antreibbar. Das erste Wickelrad 1 und das zweite Wickelrad 2 sind zum Eingriff in nicht dargestellte Wickelöffnungen einer Magnetbandkassette 21 vorgesehen. Es sind eine erste Andruckrolle 5 und eine zweite Andruckrolle 6 vorgesehen. Die erste Andruckrolle 5 ist mittels eines nicht näher dargestellten Andruckrollenmechanismus gegen die erste Tonwelle 3 und die zweite Andruckrolle 6 gegen die zweite Tonwelle 4 andrückbar.

Es ist ein Magnetkopf 8 vorgesehen, der an einer Magnetkopfträgerplatte 9 auf nicht näher dargestellte Weise angeordnet ist. Der Magnetkopf 8 kann an der Magnetkopfträgerplatte 9 sowohl fest als auch drehbar als auch verschiebbar angeordnet sein. Die Magnetkopfträgerplatte 9 weist einen ersten Schenkel 9a und einen zweiten Schenkel 9b auf. Die Magnetkopfträgerplatte 9 ist in einem Übergangsbereich zwischen dem ersten Schenkel 9a und dem zweiten Schenkel 9b um einen Drehpunkt 9c drehbar an einer Chassisplatte 10 angelagert. Am Ende des zweiten Schenkels 9b der Magnetkopfträgerplatte 9 ist ein Steuerstift 11 befestigt. An der Chassisplatte 10 ist eine Steuerscheibe 12 drehbar angelagert, die von einem nicht näher dargestellten Antriebsmechanismus drehend antreibbar ist. Die Steuerscheibe 12 weist an ihrem Umfangsrand einen Zahnkranz 12a sowie in ihrem inneren Bereich eine Steuerkontur 12b auf. Der Steuerstift 11 greift in die Steuerkontur 12b der Steuerscheibe 12 ein. Bei Drehung der Steuerscheibe 12 wirkt die Steuerkontur 12b derart auf den Steuerstift 11 der Magnetkopfträgerplatte 9 ein, daß der an der Magnetkopfträgerplatte 9 angeordnete Magnetkopf 8 auf die Verbindungslinie 7 der ersten Tonwelle 3 und der zweiten Tonwelle 4 zu oder von dieser weggeschwenkt werden kann. An der Chassisplatte 10 ist eine Verriegelungsfeder 13 an einem Befestigungspunkt 14 einseitig befestigt. Die Verriegelungsfeder 13 ist als Blattfeder ausgebildet und weist eine Verriegelungsnase 15 auf. Die Federkraft der Verriegelungsfeder 13 wirkt im wesentlichen in einer vertikalen Richtung 16. Infolge dieser in der vertikalen Richtung 16 wirkenden Federkraft der Verriegelungsfeder 13 wird die Verriegelungsnase 15 in eine Nut 17 der Steuerscheibe 12 gedrückt, wodurch die Steuerscheibe 12 in der in der Fig. 1 gezeigten Auswurfposition des Lademechanismus gegen ein Verdrehen gesichert ist.

Ein im übrigen nicht näher dargestellter Lademechanismus des Magnetbandkassettengerätes weist eine in der Fig. 1 schematisch dargestellte Transportstange 18 mit einem Transportstangenzahnkranz 18a auf, welche von einem Transportrad 19, welches einen Transportradzahnkranz 19a aufweist, in einer horizontalen Richtung 20 bewegbar an der Chassisplatte 10 angelagert ist. Die Transportstange 18 ist zum Transport von nicht näher dargestellten Teilen des Lademechanismus vorgesehen, insbesondere zum Transport eines Kassettenschachtes 22, der zur Aufnahme der Magnetbandkassette 21 vorgesehen ist. Der Kassettenschacht 22 mit der Magnetbandkassette 21 wird während des Ladevorganges zunächst in der horizontalen Richtung 20 bewegt und nachfolgend in der vertikalen Richtung 16 abgesenkt, so daß die Wickelöffnungen der Magnetbandkassette mit dem ersten Wickelrad 1 und dem zweiten Wickelrad 2 in Eingriff kommen. Genauere Einzelheiten eines derartigen Lademechanismus sind in der DE 196 09 790 beschrieben.

In der in Fig. 1 dargestellten Auswurfposition des Magnetbandkassettengerätes befindet sich die Magnetbandkassette 21 teilweise außerhalb der Chassisplatte 10 und kann von der Hand einer Bedienperson entnommen werden. Die Transportstange 18 wirkt in der in Fig. 1 gezeigten Auswurfposition nicht auf die Verriegelungsfeder 13 ein.

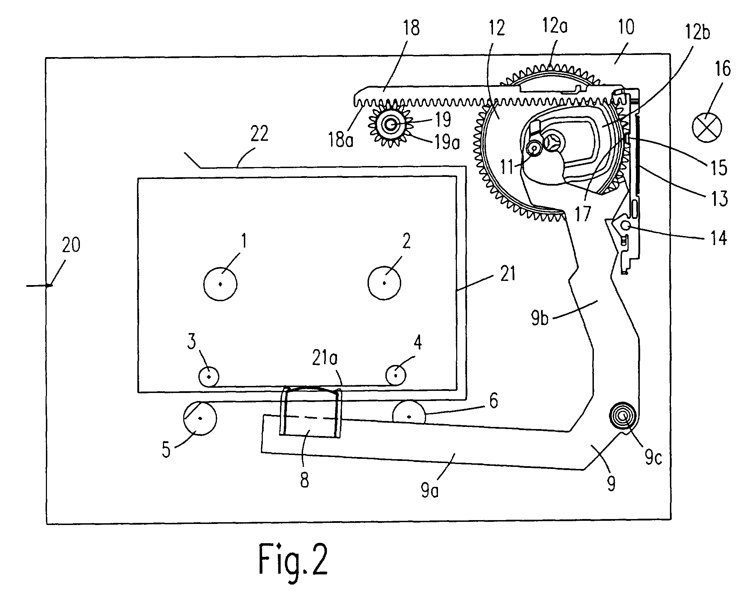

Fig. 2 zeigt eine schematisch dargestellte Draufsicht auf Teile des Magnetbandkassettengerätes in der Wiedergabeposition. Die Transportstange 18 ist gegenüber der in der Fig. 1 gezeigten Auswurfposition mittels Drehen des Transportrades 19 in der horizontalen Richtung 20 in Richtung auf die Verriegelungsfeder 13 bewegt worden und drückt die Verriegelungsfeder 13 entgegen der vertikalen Richtung 16 nach oben, wodurch die Verriegelungsnase 15 der Verriegelungsfeder 13 aus der Nut 17 der Steuerscheibe 12 herausgedrückt wird. Mit der Transportstange 18 ist auch der gesamte, nicht näher dargestellte Lademechanismus von der Auswurfposition in die Wiedergabeposition überführt worden, wodurch der Kassettenschacht 22 mit der Magnetbandkassette 21 zunächst in der horizontalen Richtung bewegt worden ist und dann nachfolgend in der vertikalen Richtung 16 auf das erste Wickelrad 1 und das zweite Wickelrad 2 abgesenkt worden ist. Die Steuerscheibe 12 ist in der Wiedergabeposition entriegelt und ist mittels des nicht näher dargestellten Antriebsmechanismus im Uhrzeigersinn verdreht worden, wodurch die Steuerkontur 12b derart auf den Steuerstift 11 der Magnetkopfträgerplatte 9 eingewirkt hat, daß diese sich ebenfalls im Uhrzeigersinn in Richtung auf die Magnetbandkassette 21 zu bewegt hat und der Magnetkopf 8 zur Wiedergabe gegen das Magnetband 21 a der Magnetbandkassette 21 gedrückt wird.

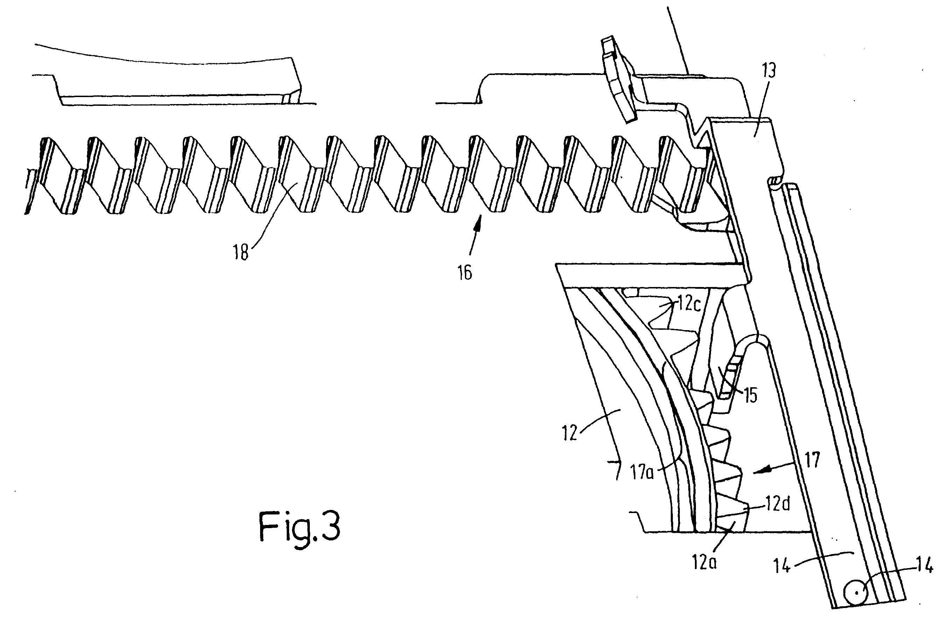

Fig. 3 zeigt eine perspektivische vergrößerte Darstellung der Transportstange 18, der Verriegelungsfeder 13 mit der Verriegelungsnase 15 sowie der Steuerscheibe 12 in der Wiedergabeposition des Lademechanismus gemäß Fig. 2. In Fig. 3 ist zu erkennen, daß die Transportstange 18 die an dem Befestigungspunkt 14 befestigte Verriegelungsfeder 13 in der vertikalen Richtung 16 nach oben drückt, wodurch die Verriegelungsnase 15 der Verriegelungsfeder 13 aus der Nut 17 der Steuerscheibe 12 herausgedrückt wird. Der Zahnkranz 12a der Steuerscheibe 12 weist gemäß Fig. 3 außerhalb eines Öffnungswinkelbereiches 17a der Nut 17 Zähne 12c und innerhalb des Nutöffnungswinkelbereiches 17a der Nut 17 Zähne 12d auf. Die Zähne 12d des Zahnkranzes 12a weisen in der vertikalen Richtung 16, d.h. in axialer Richtung zu der Steuerscheibe 12, eine geringere Höhe auf als die Zähne 12c. Die Nut 17 wird somit durch die unterschiedliche Höhe der Zähne 12c bzw. 12d gebildet.

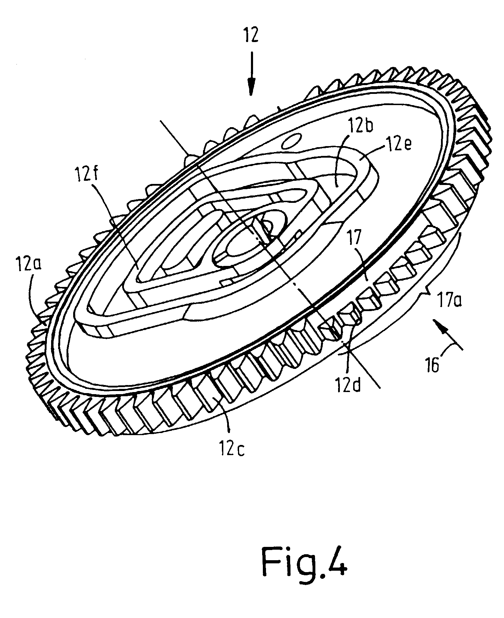

Fig. 4 zeigt eine perspektivische Darstellung der Steuerscheibe 12 gemaß den Fig. 1 bis 3. Die Steuerscheibe 12 weist den Zahnkranz 12a mit den Zähnen 12c außerhalb des Nutöffnungswinkelbereiches 17a und mit den Zähnen 12d innerhalb des Nutöffnungswinkelbereiches 17a auf. Die Zähne 12d innerhalb des Nutöffnungswinkelbereiches 17a weisen in vertikaler Richtung, d.h. in axialer Richtung der Steuerscheibe 12, eine geringere Höhe auf als die Zähne 12c außerhalb des Nutöffnungswinkelbereiches 17a. Dadurch wird in dem Zahnkranz 12a der Steuerscheibe 12 die Nut 17 gebildet, in die die Verriegelungsnase 15 der Verriegelungsfeder 13 gemäß den Fig. 1 bis 3 eintauchen kann. Die Steuerscheibe 12 weist die Steuerkontur 12b auf, welche von einer ersten Steuerwand 12e und von einer zweiten Steuerwand 12f gebildet wird.

## Patentansprüche

1. Magnetbandkassettengerät mit einem Lademechanismus (18, 19) zum Laden der Magnetbandkassette (21) von einer Auswurfposition in eine Wiedergabeposition und mit einem Magnetkopftransportmechanismus (9, 12) zum Transport eines Magnetkopfes (8), dadurch gekennzeichnet, daß Verriegelungsmittel (13) zum Verriegeln des Magnetkopftransportmechanismus (9, 12) in Abhängigkeit der Position des Lademechanismus (18, 19) vorgesehen sind.

2. Magnetbandkassettengerät nach Anspruch 1, dadurch gekennzeichnet, daß der Magnetkopftransportmechanismus (9, 12) eine antreibbare Steuerscheibe (12) mit einer Steuerkontur (12b) aufweist und daß die Verriegelungsmittel (13) zur Verriegelung der Steuerscheibe (12) vorgesehen sind.

3. Magnetbandkassettengerät nach Anspruch 1 oder 2, dadurch gekennzeichnet, daß der Lademechanismus (18, 19) eine von einem Transportrad (19) antreibbare Transportstange (18) aufweist und daß die Transportstange (18) zur Entriegelung der Verriegelungsmittel (13) vorgesehen ist.

4. Magnetbandkassettengerät nach einem der Ansprüche 1 bis 3, dadurch gekennzeichnet, daß die Verriegelungsmittel (13) eine Verriegelungsfeder (13) mit einer Verriegelungsnase (15) aufweisen, die den Magnetkopftransportmechanismus (9, 12) blockiert, wenn der Lademechanismus (18, 19) nicht in der Wiedergabeposition ist.

5. Magnetbandkassettengerät nach Anspruch 4, dadurch gekennzeichnet, daß die Verriegelungsnase (15) der Verriegelungsfeder (13) in eine Öffnung (17) der Steuerscheibe (12) eingreift, wenn der Lademechanismus (18, 19) nicht in der Wiedergabeposition ist.

6. Magnetbandkassettengerät nach Anspruch 4 oder 5, dadurch gekennzeichnet, daß Mittel (18) des Lademechanismus in der Wiedergabeposition derart auf die Verriegelungsfeder (13) einwirken, daß der Magnetkopftransportmechanismus (9, 12) entriegelt ist.

7. Magnetbandkassettengerät nach Anspruch 5 oder 6, dadurch gekennzeichnet, daß die Transportstange (18) des Lademechanismus (18, 19) in der Wiedergabeposition die Verriegelungsfeder (19) aus der Öffnung (17) der Steuerscheibe (12) herausdrückt, so daß die Steuerscheibe (12) entriegelt ist.

8. Magnetbandkassettengerät nach einem der Ansprüche 4 bis 7, dadurch gekennzeichnet, daß die Steuerscheibe (12) als Zahnrad mit einem Zahnkranz (12a) ausgebildet ist und daß der Zahnkranz (12a) in einem Öffnungswinkelbereich (17a) eine Nut (17) aufweist, die zum Eingreifen der Verriegelungsnase (15) der Verriegelungssfeder (13) vorgesehen ist, falls der Lademechanismus (18, 19) sich nicht in der Wiedergabeposition befindet.

9. Autoradio mit einem Magnetbandkassettengerät nach einem der Ansprüche 1 bis 7.

10. Fahrzeug mit einem Magnetbandkassettengerät nach einem der Ansprüche 1 bis 7.
